# EUROPEAN PATENT SPECIFICATION

(11) **EP 0 420 213 B1**
(45) Date of publication and mention of the grant of the patent: **11.05.1994**
(21) Application number: 90118508.2
(22) Date of filing: 26.09.1990
(51) Int. Cl.: A01N 25/18

(54) **1,3,5-Trioxane package**
1,3,5-Trioxan-Packung
1,3,5-trioxane emballage

(30) Priority: 27.09.1989 JP 249019/89
(43) Date of publication of application: 03.04.1991
(73) Proprietor: MITSUBISHI GAS CHEMICAL COMPANY, INC., Tokyo, 100 (JP)
(72) Inventor: Takeda, Mutsuhiko, Katsushika-ku, Tokyo (JP); Kakuda, Minoru, Matsudo-shi, Chiba-ken (JP); Shimpo, Masafumi, Kashiwa-shi, Chiba-ken (JP); Yasumitsu, Mika, Katsushika-ku, Tokyo (JP)
(74) Representative: Hansmann, Axel, Dipl.-Wirtsch.-Ing.

(56) References cited:
- EP-A- 0 109 738
- EP-A- 0 269 292
- EP-A- 0 292 948
- GB-A- 1 161 545
- JOURNAL OF CONTROLLED RELEASE, vol. 8, no. 1, November 1988, pages 63-72, Amsterdam, NL; S.M. HERBIG et al.: "A membrane-based cattle insecticide eartag"

## Description

### Background of the Invention

### (1) Field of the Invention

The present invention relates to a package of 1,3,5-trioxane (referred to as "trioxane" hereinafter).

More specifically, the present invention relates to a trioxane package in which the sublimation rate of trioxane is adjusted to an appropriate level and the mothproofing action can be maintained for a long time and which can be therefore used suitably as a mothproofing agent over a long period of time.

### (2) Description of the Related Art

Trioxane is used in large quantities as the starting material for resins, but in other fields, trioxane has been hardly used and has been utilized only in small quantities as a solid fuel or a starting material for chemicals.

We examined various properties of trioxane and found a novel fact that trioxane has an excellent mothproofing action. Based on this finding, we developed a mothproofing agent comprising trioxane as the effective ingredient (see Japanese Examined Patent Publication No. 1-23441).

We furthered our research and found that the sublimation rate of trioxane is too high to use trioxane over a long period of time, for example, as a mothproofing agent for clothes and that it is necessary to adjust the sublimation rate of trioxane in order to make it possible to use trioxane over a long period of time.

We considered that the sublimation rate would be adjusted by packaging trioxane with a film and adjusting the trioxane permeation rate of the film.

As the method embodying this idea, we proposed a method comprising packaging trioxane with a perforated synthetic resin film, in which the trioxane permeation rate of the film is adjusted by the size and number of through holes and the total hole area to control the sublimation rate of trioxane (see Japanese Patent Application No. 63-103769). However, the method is disadvantageous in that a perforating step is necessary in the production of a trioxane package.

From EP-A-0 269 292 an insect-proofing agent and an insect-proofing method is known wherein the agent comprises 1,3,5-trioxane as an active ingredient which is packed with a film member such as a polyethylene or a polypropylene film. Control or adjustment of the evaporation rate of trioxane is achieved by opening the film.

Packaging of subliming mothproofing agents other than trioxane, for example, p-dichlorobenzene, naphthalene and camphor, with a polyethylene film or a polypropylene film has been conducted in the art. For example, in Japanese Unexamined Patent Publication No. 55-64503, it is taught that when p-dichlorobenzene is packaged with a polyolefin film, the permeation rate of p-dichlorobenzene can be freely adjusted by changing the thickness of the polyolefin film.

However, from the results of tracing experiments made by us, it was found that even if the thickness of the polyolefin film is changed according to this proposal, the permeation ratio of p-dichlorobenzene cannot be adjusted and this p-dichlorobenzene package has no function of adjusting the permeation rate, irrespectively of the thickness of the polyolefin film.

To our surprise, it was found that the permeation rate of trioxane can be adjusted according to the moisture permeability of the polyolefin film.

### Summary of the Invention

We made research with a view to developing a packaging material capable of adjusting the permeation rate of trioxane, and as the result, it was found that only when a polyolefin film, for example, a polyethylene film or a polypropylene film, satisfying a specific requirement is selected among various synthetic resin film and used as the packaging material for trioxane, the permeation rate of trioxane can be easily adjusted. We have now completed the present invention based on this finding.

More specifically, in accordance with the present invention, there is provided a 1,3,5-trioxane package which comprises 1,3,5-trioxane packaged with a non-perforated polyolefin film having a moisture permeability of 3 to 35 g/m²/24 hours as measured at a temperature of 40°C and a relative humidity of 90%.

The moisture permeability referred to in the present invention is a factor determined by the material and thickness of the film, which is measured according to JIS (Japanese Industrial Standard) Z-0208.

This trioxane package can be used as a mothproofing agent over a long period of time and while this package is used as the mothproofing agent, the degree of decrease of the content chemical can be visually checked from the outside.

In the trioxane package of the present invention, not only trioxane but also a mixture of trioxane and an additive such as a perfume, a stabilizer or a lubricant is included as the material to be packaged.

### Detailed Description of the Preferred Embodiments

Any of polyolefin films satisfying the above-mentioned requirement can be used in the present invention without any particular limitation.

For example, there can be used films of olefin homopolymers such as polyethylene, polypropylene, polybutene, poly-n-pentene, poly-3-methyl-1-butene, poly-4-methyl-1-pentene and poly-n-hexene, olefin copolymers such as an ethylene/propylene copolymer, and mixtures of two or more of these polymers.

A polyethylene film and a polypropylene film are preferred from the practical view point among these polyolefin films. As the polyethylene film, there can be used films of low density polyethylene, medium density polyethylene and high density polyethylene. As the polypropylene film, there can be used monoaxially drawn and biaxially drawn polypropylene films and undrawn polypropylene films.

Furthermore, a laminate film comprising at least two films selected from the foregoing polyolefin films can be used as the polyolefin film.

Still further, laminated polyolefin films formed by reinforcing the foregoing polyolefin film or laminate film with a paper sheet, woven fabric or nonwoven fabric having a high air permeability can be used. Also this laminate film should have the above-mentioned moisture permeability.

In the present invention, it is indispensable that the polyolefin film should have a moisture permeability of 3 to 35 g/cm²/24 hours, as determined at a temperature of 40°C and a relative humidity of 90%.

If the moisture permeability determined under the above conditions is lower than claimed in the used polyolefin film, the rate of sublimation of trioxane from the trioxane package is too low and no substantial mothproofing function is exerted. On the other hand, if a film having a moisture permeability higher than claimed is used, the trioxane permeation rate of the film is too high and trioxane in the package is lost by sublimation in a short time and the life of the mothproofing agent is short.

In the polyolefin film used in the present invention, the moisture permeability is selected within the range of from 3 to 35 g/m²/24 hours as determined at a temperature of 40°C and a relative humidity of 90% according to desired sublimation rate of trioxane. In order to obtain a high permeation rate of trioxane based on the same surface area, a polyolefin film having a high moisture permeability is used, and in order to obtain a low trioxane permeation speed, a polyolefin film having a low moisture permeability is used.

The thickness of the polyolefin film is not particularly critical, so far as the above-mentioned condition of the moisture permeability is satisfied. However, the thickness of the polyolefin film is selected mainly according to the desired strength of the package and the easiness or difficult in the preparation of the package. From the practical viewpoint, the thickness of the polyolefin film is preferably 10 to 200 µm, especially preferably 15 to 100 µm. If the thickness is smaller than 10 µm, the film is readily broken and troubles are caused at the heat-sealing step described hereinafter. On the other hand, if the thickness is larger than 200 µm, the preparation tends to be difficult. However, use of a polyolefin film having a thickness smaller than 10 µm or larger than 200 µm is not excluded from the scope of the present invention.

In the package of the present invention, the polyolefin film can be used as a part or all of the container.

For example, the following methods are adopted for packaging trioxane with the polyolefin film in the present invention.

According to one method, powdered trioxane or granular or tablet-shaped trioxane obtained by molding particulate trioxane is packed in a bag of a polyolefin film having an opening and the opening of the bag is then sealed.

According to another method, melted trioxane is packed in a bag of a polyolefin film having an opening, the opening is sealed to obtain a trioxane-sealed body, and the sealed body is cooled to solidify and mold trioxane in the bag. Any means customarily used can be used for filling and sealing melted trioxane can be used in this method, but a liquid-filling packaging machine is preferably used. More specifically, the preparation of a bag from a polyolefin film and the filling and sealing of melted trioxane are continuously carried out by using a liquid-filling packaging machine to obtain a melted trioxane-sealed body, and the melt in the sealed body is cooled and solidified.

In the present invention, the shape of the bag for packaging trioxane is not particularly critical. For example, a bag having a polygonal surface shape such as a triangular or tetragonal shape, a geometrical shape such as a circular or ellipsoidal shape or a shape resembling an animal or character, or a polygonal cylindrical, circular cylindrical, ellipsoidal cylindrical, spherical or purse-like bag can be used. Practically, for the continuous mass production, a bag having a rectangular or square surface shape is most preferably used. A polyolefin film bag having a rectangular or square surface shape is prepared, for example, according to a conventional method in which two rectangular polyolefin films are piled and three sides of the peripheral edges of the polyolefin films are bonded. The bonding of the two films can be accomplished by customary means such as adhesion, sewing or heat sealing. Heat sealing is especially preferably adopted.

The so-obtained trioxane package of the present invention is preferably used as a mothproofing agent for preserving clothes, which shows a durable effect over a long period of time, and while the package is used, the degree of decrease of the content chemical can be visually checked from the outside.

Moreover, since the film-perforating step is not necessary in the production of the trioxane package of the present invention, the trioxane package can be prepared efficiently.

The present invention will now be described in detail with reference to the following examples that by no means limit the scope of the invention.

### Example 1

With respect to low density polyethylene films having a thickness of 20, 30, 40 or 50 µm and monoaxially drawn polypropylene films having a thickness of 20 or 40 µm, the moisture permeability at a temperature of 40°C and a relative humidity of 90% was measured according to JIS (Japanese Industrial Standard) Z-0208. The obtained results are shown in Table 1.

With respect to each of the foregoing films, a bag was formed by using two films of the same kind as the front and back surfaces, and 20 g of granular trioxane having a size of 9 to 16 mesh was filled in the bag and the bag was sealed to obtain a rectangular trioxane package having an effective surface area of 6 cm x 8 cm. A commercially available sealant was used for forming and sealing the bag.

Each of the so-obtained trioxane packages was allowed to stand still in a constant-temperature room maintained at a temperature of 22°C and a relative humidity of 50%. After 24 hours, the weight decrease of the trioxane package was measured and the trioxane permeation rate of the package was determined. The obtained results are shown in Table 1.

**Table 1**

| Run No. | Film | | Moisture Permeability (g/m /24 hours) | Trioxane Permeation Rate (g/package/24 hours) |
|---|---|---|---|---|
| | polymer | thickness (µm) | | |
| 1 | polyethylene | 20 | 28 | 0.21 |
| 2 | polyethylene | 30 | 19 | 0.11 |
| 3 | polyethylene | 40 | 14 | 0.08 |
| 4 | polyethylene | 50 | 11 | 0.07 |
| 5 | polypropylene | 20 | 13 | 0.08 |
| 6 | polypropylene | 40 | 7 | 0.04 |

### Comparative Example 1

The trioxane permeation rate was determined in the same manner as described in Example 1 except that a laminate film comprising a polyester film and a low density polyethylene film and having a thickness of 40 µm (20 µm/20 µm) and a laminate film comprising a polyamide film and a low density polyethylene film and having a thickness of 40 µm (20 µm/20 µm) were used instead of the polyethylene film.

The obtained results are shown in Table 2.

**Table 2**

| Run No. | Laminate Film | | Trioxane permeation Rate (g/package/24 hours) |
|---|---|---|---|
| | polymer | thickness (µm) | |
| C1 | polyester/polyethylene | 20/20 | 0.00 |
| C2 | polyamide/polyethylene | 20/20 | 0.00 |

### Comparative Example 2

The permeation rate was determined in the same manner as described in Example 1 except that 20 g of granular p-dichlorobenzene having a size of 9 to 16 mesh was used instead of trioxane.

The obtained results are shown in Table 3.

**Table 3**

| Run No. | Film | | p-chlorobenzene permeation Rate (g/package/24 hours) |
|---|---|---|---|
| | polymer | thickness (µm) | |
| C3 | polyethylene | 30 | 0.25 |
| C4 | polyethylene | 40 | 0.20 |
| C5 | polyethylene | 50 | 0.25 |
| C6 | polypropylene | 20 | 0.09 |
| C7 | polypropylene | 40 | 0.09 |

From the results shown in Table 3, it is seen that in the case where p-dichlorobenzene is packaged, the permeation rate is almost constant irrespectively of the thickness of the polyethylene film or polypropylene film, and the permeation rate of p-dichlorobenzene cannot be controlled according to the thickness of the polyethylene film or polypropylene film.

### Application Example 1

Ten tablets formed by molding 2 g of trioxane were packaged with a rectangular bag having an effective surface area of 8 cm x 6 cm, which was formed by using, as the front and back surfaces, laminate films comprising a Japanese paper sheet having a base weight of 20 g/cm² and a polyethylene film having a thickness of 30 µm and a moisture permeability of 19 g/cm²/24 hours to obtain a trioxane package. In this manner, five trioxane packages were prepared.

The so-prepared five trioxane packages were placed at four corners and a center, respectively, of a polypropylene drawer-type chest having an inner capacity of 50 ℓ, and four metal net cages having a diameter of 3 cm, each of which was charged with ten 33-days-old case-making clothes moth larvae (34 mg/10 larvae) and a 3 cm-square wool woven fabric (about 100 mg), were separately fixed in the chest 5 cm apart from the bottom face so that the cages were located intermediately between every two adjacent packages.

The chest was allowed to stand still in a room maintained at a temperature of 27 to 28°C and a relative humidity of 60 to 70%.

After 10 days, it was checked whether the case-making clothes moth larvae were alive or dead. It was confirmed that all of 40 clothes moth larvae were dead and the damage of the wool fabric was very small.

### Comparative Application Example 1

The test was carried out in the same manner as described in Application Example 1 except that no chemical was used. All of the fourth tested case-making clothes moth larvae were alive and the wool fabric was substantially lost by the eating damage.

## Claims

1. A 1,3,5-trioxane package which comprises 1,3,5-trioxane packaged with a non-perforated polyolefin film having a moisture permeability of 3 to 35 g/m²/24 hours as measured at a temperature of 40 °C and a relative humidity of 90 %.

2. A 1,3,5-trioxane package as set forth in claim 1, wherein the polyolefin film has a thickness of 10 to 200 µm.

3. A 1,3,5-trioxane package as seth forth in any of claims 1 or 2, wherein the polyolefin film is a polethylene film.

4. A 1,3,5-trioxane package as seth forth in any of claims 1 or 2, wherein the polyolefin film is a polypropylene film.

5. A 1,3,5-trioxane package which comprises 1,3,5-trioxane packaged with a laminate comprising a non-perforated polyolefin film and a paper sheet, woven fabric or nonwoven fabric having a high air permeability, wherein the moisture permeability of the polyolefin film is 3 to 35 g/m2/24 hours as measured at a temperature of 40 °C and a relative humidity of 90 %.

## Patentansprüche

1. 1,3,5-Trioxanpackung, welche 1,3,5-Trioxan in einem nicht-perforierten Polyolefinfilm mit einer Feuchtigkeitsdurchlässigkeit von 3 bis 35 g/m²/24 Stunden, gemessen bei einer Temperatur von 40°C und einer relativen Feuchtigkeit vom 90 %, aufweist.

2. 1,3,5-Trioxanpackung nach Anspruch 1,
**dadurch gekennzeichnet,** daß der Polyolefinfilm ein Stärke von 10 bis 200 µm aufweist.

3. 1,3,5-Trioxanpackung nach einem der Ansprüche 1 oder 2,
**dadurch gekennzeichnet,** daß der Polyolefinfilm ein Polyethylenfilm ist.

4. 1,3,5-Trioxanpackung nach einem der Ansprüche 1 oder 2,
**dadurch gekennzeichnet,** daß der Polyolefinfilm ein Polypropylenfilm ist.

5. 1,3,5-Trioxanpackung, welche 1,3,5-Trioxan verpackt mit einem Laminat aus einem nicht-perforierten Polyolefinfilm und einem Papierbogen, einem Webstoff oder einem nicht-gewebten Textilstoff mit einer hohen Luftdurchlässigkeit, worin die Feuchtigkeitsdurchlässigkeit des Polyolefinfilmes 3 bis 35 g/m²/24 Stunden, gemessen bei einer Temperatur vom 40°C und einer relativen Feuchtigkeit von 90 %, aufweist.

## Revendications

1. Paquet de 1,3,5-trioxanne qui comprend du 1,3,5-trioxanne emballé par une pellicule de polyoléfine non perforée ayant une perméabilité à l'humidité de 3 à 35 g/m²/24 heures telle que mesurée à une température de 40°C et une humidité relative de 90 %.

2. Paquet de 1,3,5-trioxanne tel que spécifié dans la revendication 1, dans lequel la pellicule de polyoléfine a une épaisseur de 10 à 200 µm.

3. Paquet de 1,3,5-trioxanne tel que spécifié dans l'une quelconque des revendications 1 et 2, dans lequel la pellicule de polyoléfine est une pellicule de polyéthylène.

4. Paquet de 1,3,5-trioxanne tel que spécifié dans l'une quelconque des revendications 1 et 2, dans lequel la pellicule de polyoléfine est une pellicule de polypropylène.

5. Paquet de 1,3,5-trioxanne qui comprend du 1,3,5-trioxanne emballé par un stratifié comprenant une pellicule de polyoléfine non perforée et une feuille de papier, une étoffe tissée ou une étoffe non tissée ayant une grande perméabilité à l'air, dans lequel la perméabilité à l'humidité de la pellicule de polyoléfine est de 3 à 35 g/m²/24 heures telle que mesurée à une température de 40°C et une humidité relative de 90 %.
